# FASCICULE DE BREVET EUROPEEN

(11) **EP 2 560 932 B1**
(45) Date de publication et mention de la délivrance du brevet: **07.06.2017**
(21) Numéro de dépôt: 11721563.2
(22) Date de dépôt: 18.04.2011
(51) Int. Cl.: C04B 35/117, C04B 35/14, C04B 35/185, C04B 35/488, C04B 35/628, C04B 35/80

(54) **PROCÉDÉ D'ÉLABORATION D'UNE PIÈCE COMPOSITE À MATRICE CÉRAMIQUE**
VERFAHREN ZUR HERSTELLUNG EINES KERAMIKMATRIXVERBUNDTEILS
PROCESS FOR PRODUCING A CERAMIC MATRIX COMPOSITE PART

(30) Priorité: 20.04.2010 FR 1001664
(43) Date de publication de la demande: 27.02.2013
(73) Titulaire: Office National d'Etudes et de Recherches Aérospatiales (O.N.E.R.A.), 91120 Palaiseau (FR)
(72) Inventeur: RITTI, Marie-Hélène, F-92290 Chatenay Malabry (FR); LAINE, Bertrand, F-33320 Le Taillan Médoc (FR); PARLIER, Michel, F-78960 Voisins le Bretonneux (FR); JULIAN-JANKOWIAK, Aurélie, F-91470 Limours (FR)
(74) Mandataire: Plaçais, Jean Yves
(86) Numéro de dépôt international: PCT/FR2011/000230
(87) Numéro de publication internationale: WO 2011/131857

(56) Documents cités:
- EP-A1- 1 647 537
- DE-C1- 10 013 409
- FR-A1- 2 912 469
- US-A- 5 306 554
- JAMES Y. YANG ET AL: "Processing of Oxide Composites with Three-Dimensional Fiber Architectures", JOURNAL OF THE AMERICAN CERAMIC SOCIETY, vol. 92, no. 5, 1 mai 2009 (2009-05-01), pages 1087-1092, XP55002892, ISSN: 0002-7820, DOI: 10.1111/j.1551-2916.2009.03036.x
- Moore, E. H., Mah, T.-I. and Keller, K. A.: "3-D Composite Fabrication Through Matrix Slurry Pressure Infiltration", Proceedings of the 18th Annual Conference on Composites and Advanced Ceramic Materials - A: Ceramic Engineering and Science Proceedings, vol. 15, no. 4 (ed J. B. Wachtman) 28 mars 2008 (2008-03-28), pages 113-120, XP002609140, John Wiley & Sons, Inc., Hoboken, NJ, USA DOI: 10.1002/9780470314500.ch13 Extrait de l'Internet: URL:http://onlinelibrary.wiley.com/doi/10. 1002/9780470314500.ch13/pdf [extrait le 2010-11-10]
- Sim, S.-M. and Kerans, R. J.: "Slurry Infiltration of 3-D Woven Composites", Proceedings of the 16th Annual Conference on Composites and Advanced Ceramic Materials, Part 2 of 2: Ceramic Engineering and Science Proceedings, vol. 13, no. 9/10 (ed J. B. Wachtman) 26 mars 2008 (2008-03-26), pages 632-641, XP002609141, John Wiley & Sons, Inc., Hoboken, NJ, USA DOI: 10.1002/9780470313978.ch7 Extrait de l'Internet: URL:http://onlinelibrary.wiley.com/doi/10. 1002/9780470313978.ch7/summary [extrait le 2010-11-10]
- NASKAR M K ET AL: "Sol-gel approach to near-net-shape oxide-oxide composites reinforced with short alumina fibres-The effect of crystallization", CERAMICS INTERNATIONAL, ELSEVIER, AMSTERDAM, NL LNKD- DOI:10.1016/J.CERAMINT.2009.04.013, vol. 35, no. 8, 1 décembre 2009 (2009-12-01), pages 3073-3079, XP026640950, ISSN: 0272-8842 [extrait le 2009-05-21]

## Description

L'invention se rapporte au domaine des Composites à Matrice Céramique (en abrégé CMC).

Elle concerne plus particulièrement un procédé d'élaboration d'une pièce composite à matrice céramique par infiltration d'une suspension d'une poudre céramique dans un renfort fibreux, ainsi que la pièce composite ainsi obtenue.

Les composites à matrice céramique sont des matériaux émergeants présentant des propriétés thermomécaniques élevées et pouvant être utilisés dans des conditions opératoires sévères, comme des températures supérieures à 750°C ou des environnements corrosifs.

Compte tenu de leurs performances thermomécaniques élevées, ces matériaux trouvent une application particulière dans la réalisation de pièces mécaniques, par exemple dans le domaine de l'aéronautique ou l'aérospatiale, pour des parties de moteur, etc.

L'élaboration de pièces composites de matrice céramique pose différents problèmes.

Tout d'abord, comme les céramiques sont des matériaux fragiles, il est nécessaire de contrôler parfaitement la cohésion fibre/matrice pour éviter une rupture prématurée du matériau par rupture des fibres lors de la propagation de fissures dans la matrice céramique. Pour ce faire, il est nécessaire de limiter la liaison fibre/matrice en introduisant de la porosité dans la matrice ou une interphase fibre/matrice (carbone par exemple).

En dehors de la nature des fibres, deux autres paramètres importants pour les propriétés mécaniques sont (i) le taux volumique de fibre et (ii) la nature de la matrice, le premier étant fortement dépendant du procédé d'élaboration.

On connaît déjà plusieurs procédés qui permettent d'élaborer ce type de composites, comme l'infiltration sous vide-pression ou encore le moulage en poche plastique de pré-imprégnés par une suspension.

Une suspension est constituée de particules en suspension dans une phase liquide de transport. Cependant, cette phase liquide peut également jouer le rôle de solvant pour des ajouts organiques ou pour des précurseurs liquides de céramique. Pour cette raison et pour simplifier la nomenclature, la phase liquide de transport est appelée ici "solvant".

Un procédé d'infiltration sous vide-pression (ou aspiration de poudre submicronique APS) pour l'élaboration de CMC a déjà été mis au point par le demandeur (voir FR 2 526 785 et EP 0 656 329). Dans ce procédé connu, un renfort fibreux est placé sur un filtre, une suspension céramique en milieux aqueux est versée sur la surface supérieure du renfort, une pression est appliquée sur la surface libre de la suspension pour la faire pénétrer dans le renfort et un vide est fait sous la face inférieure du filtre pour éliminer l'eau sous forme liquide. Cette technique a l'avantage d'élaborer en une seule étape les CMC en limitant les inclusions gazeuses, mais un taux volumique de fibre supérieur à 40 % est difficile à atteindre dans la pratique pour des empilements de tissus. Par ailleurs, ce procédé connu ne permet pas de réaliser des pièces de formes complexes et de grandes dimensions.

Plus récemment, un procédé de moulage en poche plastique de pré-imprégnés (« pré-preg ») a été mis au point pour augmenter le taux volumique de fibre et ainsi les propriétés mécaniques des matériaux (voir les publications US 5 569 422, EP 1 281 697 et US 2002/0197467). Après imprégnation d'un tissu fibreux par diverses méthodes connues (coulage en bande, trempage, etc.) avec une suspension céramique, les plis du tissus sont séchés partiellement, puis empilés sur un outil ou un moule et pressés sous vide avec un contrôle de la température. Le pressage sous vide en température permet d'éliminer le solvant sous forme de vapeur.

Cette technique permet d'élaborer des pièces plus complexes que par infiltration sous vide-pression avec des taux volumiques de fibre supérieurs à 40 %, et même parfois de 50 % en volume. Cependant, cette technique connue nécessite une étape préalable de pré-imprégnation des plis du renfort fibreux, ce qui complique la mise en oeuvre du procédé.

EP 1 647 537 décrit l'infiltration dans un renfort fibreux d'une suspension céramique provenant d'un support poreux saturé placé initialement dans une cavité formée par deux membranes et présentes au moment de la réalisation du vide dans la cavité.

L'article « Processing of Oxides Composits with Three-Dimensional Fiber Architectures » de James Y. Yang et al. Journal of the American Ceramic Society vol. 92, n°5, 1 mai 2009, pages 1087-1092 propose déposer une suspension directement sur un renfort fibreux.

FR 2 912 537 concerne une pyrolise de résine injectée sous forme liquide.

DE 100 13 409 concerne l'injection d'une matrice en résine monophasique visqueuse.

L'invention a notamment pour but de surmonter les inconvénients des procédés connus.

Elle vise notamment à élaborer des pièces de composites à matrice céramique de grande taille et de forme complexe en une seule étape d'infiltration, tout en conservant les propriétés mécaniques suffisantes pour l'usage prévu.

Par l'expression "pièces de grande taille", on entend désigner ici des pièces, notamment dans le domaine de l'aéronautique ou de l'aérospatiale, qui peuvent atteindre des dimensions de plusieurs mètres.

L'invention vise également à élaborer une telle pièce mécanique, en une seule étape, avec un taux volumique de fibre contrôlé pouvant atteindre 60 %.

Sous un premier aspect, l'invention concerne un procédé d'élaboration d'une pièce composite à matrice céramique (CMC) par infiltration d'une suspension d'une poudre céramique dans un renfort fibreux non pré-imprégné.

Le procédé de l'invention comprend les étapes suivantes :
a) préparation d'une suspension de poudre céramique contenant des particules de granulométries choisies, dispersées dans au moins un solvant, dans laquelle la poudre céramique contient des particules ayant un diamètre entre 5 et 10 fois plus petit que la taille des interstices délimité par les fibres composant le renfort fibreux, et dans laquelle la suspension présente un taux de charge en particules suffisant pour ne nécessiter qu'une seule étape d'infiltration ;
b) mise en place d'un renfort fibreux sous la forme de plis d'un tissu de fibres, dans un moule;
c) mise en place d'une membrane perméable de perméabilité choisie sur le renfort fibreux c'est-à-dire perméable aux gaz et/ou aux liquides, permettant ainsi de fermer une première cavité contenant le renfort fibreux ;
d) mise en place d'une membrane imperméable, formant contre-moule, permettant ainsi de fermer une deuxième cavité, étanche, accolée à la première cavité et contenant cette première cavité ;
e) établissement d'un vide entre la membrane imperméable et la membrane perméable, dans la deuxième cavité, de manière à faire le vide dans la première cavité ;
f) injection, dans ladite première cavité, sous la membrane perméable, de la suspension de poudre céramique de l'étape a) dans le renfort fibreux, par différence de pression, l'injection étant réalisée en une seule étape d'infiltration ;
g) élimination du solvant à travers la membrane perméable pour obtenir une préforme infiltrée ;
h) démoulage de la préforme infiltrée obtenue à l'étape g) ; et
i) frittage de la préforme infiltrée obtenue à l'étape h) .

Ce procédé permet d'infiltrer, en une seule étape, une suspension d'une poudre céramique dans un renfort fibreux pour élaborer des pièces pouvant être de grande taille et de forme complexe avec un taux volumique de fibres facilement contrôlable et pouvant atteindre 60 %, voire plus.

Dans le procédé de l'invention, la poudre céramique est introduite par différence de pression dans le renfort fibreux sous la forme d'une suspension, ce qui nécessite par la suite l'élimination du solvant. On utilise ici une suspension multiphasée (phase solide + phase liquide) et, de ce fait, les forces de capillarité au sein du renfort fibreux peuvent conduire à une vitesse de déplacement de la phase liquide plus élevée que celle de la phase solide.

Les CMC n'avaient jamais été élaborés par infiltration d'une suspension céramique avec des taux volumiques de fibre aussi élevés (supérieurs à 60 %), et a fortiori en une seule étape. Un tel procédé d'infusion/infiltration n'avait pas été mis en oeuvre dans le cadre des CMC car il nécessite de parfaitement contrôler la granulométrie des poudres, ainsi que l'homogénéité et la viscosité de la suspension. Ce procédé nécessite d'utiliser des poudres de granulométrie contrôlée, en particulier de granulométrie très fine (typiquement inférieure à 1 µm), voire colloïdale (typiquement inférieure à 220 nm) avec des taux de charge de la suspension assez importants (pouvant être supérieurs à 50 % en volume).

Une autre caractéristique importante du procédé de l'invention est la mise en place d'une membrane ou couche perméable, qui permet de ne conserver que les éléments désirés (poudre céramique et éventuellement un précurseur de céramique) et qui permet ultérieurement l'élimination du solvant.

Ainsi, le procédé de l'invention repose notamment sur trois caractéristiques essentielles, à savoir l'utilisation d'une poudre céramique de granulométrie choisie, l'infiltration de la suspension par différence de pression et la présence de la membrane perméable par laquelle le solvant est éliminé de la matrice céramique.

En particulier, le procédé de l'invention permet d'élaborer des CMC à partir de renforts fibreux de forte épaisseur, typiquement compris entre 5 et 50 mm, comme par exemple des renforts fibreux 3D (trois dimensions) épais, ce que ne permettaient pas les procédés de l'art antérieur.

La suspension de poudre céramique préparée à l'étape a) comprend avantageusement au moins une poudre céramique, au moins un solvant et facultativement au moins un précurseur de céramique.

Comme poudre céramique, on peut utiliser tout particulièrement des matériaux du type carbure, nitrure, borure ou oxyde, avec une préférence pour l'alumine.

Comme solvant on utilise avant tout de l'eau ou des milieux organiques, comme par exemple des alcools, des alcanes, etc.

Pour le précurseur, on envisage tout particulièrement des matériaux du type zircone, mullite, alumine, silice ou un de leurs mélanges.

La granulométrie des particules est choisie en fonction des interstices caractéristiques du renfort fibreux.

Ainsi, le renfort fibreux étant composé de fibres délimitant des interstices d'une taille de valeur donnée, la poudre de céramique est composée de particules ayant un diamètre entre 5 et 10 fois plus petit que la taille des interstices. Cette granulométrie est de préférence inférieure à 0,5 µm.

Il est possible aussi, en variante, d'utiliser des poudres céramique d'au moins deux granulométries différentes. Comme exemple, on peut utiliser des diamètres de particules entre 5 et 10 fois plus petits que la taille des interstices précités et des diamètres de particules entre 50 et 100 fois plus petits que la taille des interstices précités.

Le taux de charge de la suspension peut atteindre 50 % en volume et être ajusté en fonction du taux volumique de fibres et de la porosité fixée.

La dispersion des particules peut se faire par le contrôle du pH en milieu aqueux ou par ajout d'un dispersant en milieux organique et aqueux. Des poudres de granulométries et de natures différentes peuvent être mélangées en fonction de la nature et de la fonction du composite.

Comme indiqué, on peut ajouter un ou des précurseurs de céramique, par exemple des précurseurs liquides, dans la suspension céramique, dans la limite de leur solubilité. Leur but est de conférer des propriétés particulières aux matériaux, de diminuer la température de traitement thermique ou encore d'améliorer l'infiltration.

D'autres ajouts organiques peuvent être utilisés, comme un liant et/ou un plastifiant et/ou un agent mouillant et/ou un agent anti-moussant, afin de conférer une meilleure tenue mécanique et une meilleure flexibilité aux composites avant traitement thermique.

Comme exemples de liants et de plastifiants, on peut citer des produits du groupe des alcools polyvinyliques (PVA), des méthacrylates de méthyle, en particulier des polyméthacrylates de méthyle (PMMA), et des polyéthylènes glycols (PEG), en particulier à basse densité.

L'agent mouillant peut être par exemple un poly méthacrylate d'ammonium.

L'agent anti-moussant peut être constitué de dérivés d'acide gras et d'hydrocarbures.

Cette suspension est homogénéisée par des techniques courantes, par exemple broyage au planétaire, attrition, etc.

Pour les fibres du renfort fibreux, on peut utiliser avantageusement des fibres de carbure de silicium (SiC), de carbone (C) ou d'oxyde. Toutefois, les composites à fibres oxydes et matrice nitrure, carbure ou borure semblent pour l'instant peu envisageables compte tenu du fait que ces matrices ont des températures de frittage trop élevées pour les fibres d'oxyde.

Les fibres sont généralement revêtues d'un ensimage de façon à les manipuler et à les tisser plus facilement.

Les fibres d'oxyde peuvent être de natures différentes et sont généralement fournies par la Société 3M sous les désignations Nextel® 610, Nextel® 720, Nextel® 650, Nextel® 312, Nextel® 550 ou Nextel® 440, par exemple.

Des exemples de fibres de carbure de silicium sont des fibres fournies sous les marques Tyranno®, Sylmaric®, Nicalon®, etc.

Des exemples de fibres de carbone sont des fibres commercialisées sous les marques Novoltex® ou Naxeco®.

Les fibres peuvent être utilisées sous forme de renforts tissés (2D ; 2, 5D ; 3D), tressés (2D, 3D), tricotés, confectionnés sous forme de feutres ou de renforts multiaxiaux à base d'unidirectionnels cousus. Ces renforts peuvent être préformés pour produire des pièces de géométrie complexe.

Dans le procédé de l'invention, l'étape a) de préparation de la suspension et l'étape b) de la mise en place du renfort fibreux peuvent être réalisées en succession ou éventuellement en parallèle.

Le renfort fibreux mis en place à l'étape b) est composé de plis que l'on dispose dans un moule de forme désirée, le terme "moule" désignant de façon générale tout support approprié (par exemple un outil) pour recevoir le renfort fibreux.

Le renfort fibreux peut être éventuellement mouillé au préalable.

Le procédé peut comprendre en outre une étape de désensimage du renfort fibreux, cette étape pouvant être mise en oeuvre avant et/ou pendant l'étape d'injection f), par action thermique ou chimique, par exemple par dissolution de l'ensimage dans le solvant.

Une interphase, par exemple du carbone ou du nitrure de bore, peut être déposée sur le renfort fibreux préalablement à l'étape d'injection f).

À l'étape c), on met en place une membrane perméable (membrane ou filtre) de perméabilité choisie, c'est-à-dire perméable aux gaz et/ou aux liquides. Cette étape c) permet ainsi de fermer une première cavité contenant le renfort fibreux.

À l'étape d), on met en place une membrane imperméable (c'est-à-dire imperméable aux gaz, liquides et solides) formant un contre-moule pour assurer l'étanchéité de l'ensemble et délimiter une deuxième cavité.

Cette étape d) forme ainsi une deuxième cavité étanche, accolée à la première cavité et contenant cette première cavité.

Le moule et la membrane imperméable formant contre-moule délimitent conjointement une cavité de moulage de forme choisie correspondant à la forme de la pièce à réaliser. Il peut s'agir soit d'une cavité de moulage de volume fixe (contre-moule rigide), soit d'une cavité de moulage de volume variable, le contre-moule étant de structure souple ou semi-rigide.

Des tissus d'arrachage et/ou drainants peuvent être ajoutés sur les plis du renfort fibreux et au-dessus de la membrane perméable pour faciliter l'évacuation des fluides.

À l'étape e), on réalise un vide entre la membrane imperméable et la membrane perméable.

On génère un vide dans la deuxième cavité, ce qui crée un vide dans la première cavité et permet dans un premier temps d'infiltrer ou d'infuser la suspension dans le renfort fibreux en l'injectant sous la membrane perméable. Dans un deuxième temps le solvant est éliminé sous forme gazeuse et/ou liquide à travers cette même membrane perméable (étape g).

Dans le cas d'un procédé à volume variable, la suspension de céramique est infusée sous la membrane perméable par dépression avec la possibilité d'ajouter une pression sur la suspension.

Par ailleurs, le taux volumique de fibres est fixé par l'épaisseur des plis et peut être ajusté par l'application d'une pression extérieure sur les plis (autoclave ou presse par exemple).

Cette pression, lorsqu'elle est appliquée pendant ou après l'injection/infusion, peut participer à la bonne imprégnation du renfort fibreux.

Dans le cas d'un procédé à volume constant, le taux volumique de fibres est fixé par le cadre du moule et la suspension peut être infiltrée soit en générant un vide, soit en appliquant une pression sur la suspension, soit en combinant les deux. La suspension est alors infiltrée en une seule étape dans la totalité du renfort fibreux, et non plus pli par pli ou en plusieurs infiltrations, comme dans l'état de l'art.

Pour faciliter l'élimination du solvant, le composite peut être entièrement enrobé d'une membrane perméable puis d'une membrane imperméable, ce qui permet d'éliminer les gaz et les liquides de part et d'autre du composite. Le vide est alors fait en plusieurs endroits sous la membrane imperméable. De la même façon, il est possible d'injecter la suspension en plusieurs endroits afin de faciliter l'infiltration.

La porosité du matériau est contrôlée par le taux volumique de fibres ainsi que par le taux de charge en volume de la suspension infiltrée.

Les paramètres vide/pression sont ajustés en fonction de la viscosité de la suspension et l'élimination du solvant peut être favorisée par l'application d'une température.

Après élimination du solvant et séchage des composites, ces derniers sont démoulés (étape g) puis frittés (étape h).

Ce frittage (ou consolidation) est réalisé à une température adaptée aux fibres et particules utilisés, et généralement sous pression et atmosphère contrôlées (air, argon, vide, etc.).

Enfin, est décrite une pièce composite à matrice céramique telle qu'on peut l'obtenir par la mise en oeuvre du procédé défini ci-dessus.

Dans la description qui suit, faite seulement à titre d'exemple, on se réfère aux dessins annexés sur lesquels :
- la figure 1 illustre schématiquement un dispositif de moulage à volume variable pour la mise en oeuvre du procédé de l'invention ;
- la figure 2 est une vue en coupe schématique d'un autre dispositif de moulage à volume variable ;
- la figure 3 est une représentation schématique d'un dispositif de moulage à volume constant pour la fabrication d'une pièce à section générale en forme de U ;
- la figure 4 est une vue en perspective de la pièce moulée obtenue avec le dispositif de la figure 3 ;
- la figure 5 représente le détail V de la figure 4, à échelle agrandie, pour illustrer les plis du renfort fibreux ; et
- la figure 6 représente le détail VI de la figure 5, à échelle agrandie.

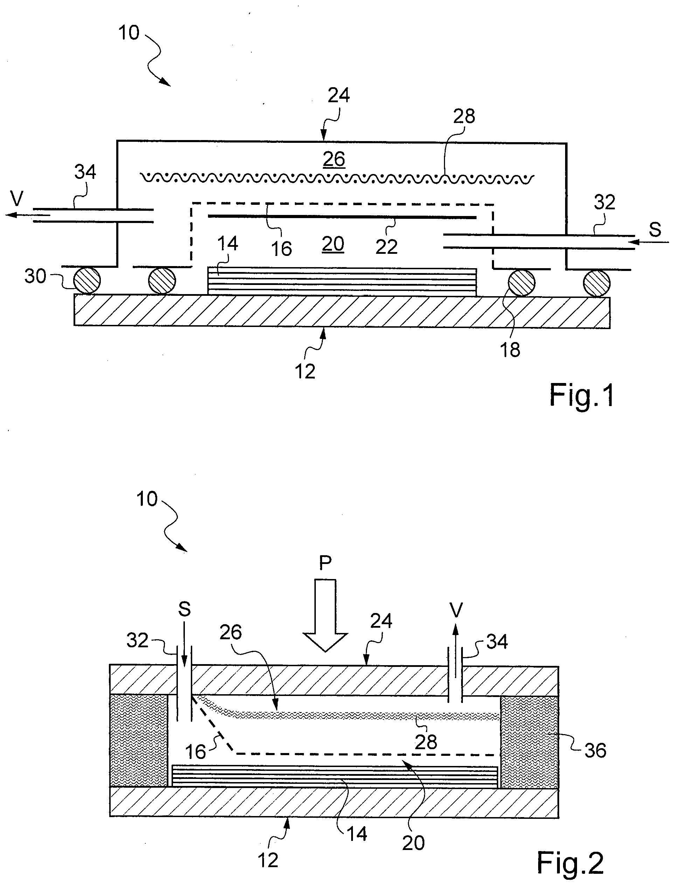

Le dispositif de moulage 10 représenté sur la figure 1 comprend un moule 12, ici un fond de moule, de structure imperméable. Sur ce fond de moule est mis en place un renfort fibreux 14 sous la forme de plis d'un tissu de fibres comme défini précédemment.

Au-dessus du renfort fibreux 14 est ensuite mise en place une membrane perméable 16 avec interposition d'un joint 18 entre cette membrane et le moule 12. On délimite ainsi, entre le moule 12 et la membrane 16, une première cavité 20 qui contient le renfort fibreux 14. Un tissu d'arrachage 22 éventuellement couplé à un tissu drainant est placé en outre au-dessus du renfort fibreux 14 à l'intérieur de la cavité 20.

Une membrane ou couche imperméable 24 est mise en place au-dessus de la membrane perméable 16 et contribue à former une deuxième cavité 26 accolée à la première cavité et contenant cette première cavité. Cette membrane imperméable 24 forme un contre-moule qui, en combinaison avec le moule 12, donnera la forme désirée à la pièce à fabriquer. Ce contre-moule est ici de structure souple ou semi-rigide pour permettre de mettre en oeuvre un procédé à volume variable.

Dans la deuxième cavité 26, et au-dessus de la membrane perméable 16, est placé un tissu drainant 28.

Un joint 30 assure l'étanchéité entre la membrane imperméable 24 qui forme contre-moule et le moule 12.

Un conduit d'injection 32 traverse de façon étanche la membrane imperméable 24 et débouche dans la première cavité 20. Ce conduit sert à l'injection de la suspension de poudre céramique (flèche S) dans le renfort fibreux 14.

Par ailleurs, un conduit d'aspiration 34 traverse de façon étanche la membrane 24 et débouche dans la deuxième cavité 26. Ce conduit permet de réaliser un vide (flèche V) entre la membrane imperméable 24 et la membrane perméable 16.

Le dispositif 10 de la figure 1 est représenté de façon schématique et il est susceptible, en pratique, d'être réalisé sous différentes formes, pour que le moule 12 et la membrane imperméable 24 contribuent à délimiter conjointement une cavité de moulage correspondant à la forme géométrique de la pièce à élaborer.

Il est possible de prévoir un ou plusieurs conduits d'injection 32 en des endroits choisis et, de même, un ou plusieurs conduits d'aspiration 34 en des endroits choisis.

La figure 2 montre un dispositif analogue à celui de la figure 1 qui permet également un procédé à volume variable. La membrane imperméable 24 repose ici sur au moins une cale déformable et imperméable 36, par exemple une cale périphérique, qui repose elle-même sur le moule 12. Le conduit d'injection 32 et le conduit d'aspiration 34 traversent tous deux la membrane imperméable 24 qui forme une sorte de couvercle généralement plan reposant sur la cale 36.

Une pression extérieure (flèche P) peut être appliquée sur la membrane imperméable 24 en direction du moule 12, ce qui permet de déformer et comprimer la cale 36. Pour le reste, les autres éléments sont désignés par les mêmes références numériques que sur la figure 1. Dans cette forme de réalisation, le tissu d'arrachage 22 éventuellement couplé à un tissu drainant 22 de la figure 1 a été supprimé.

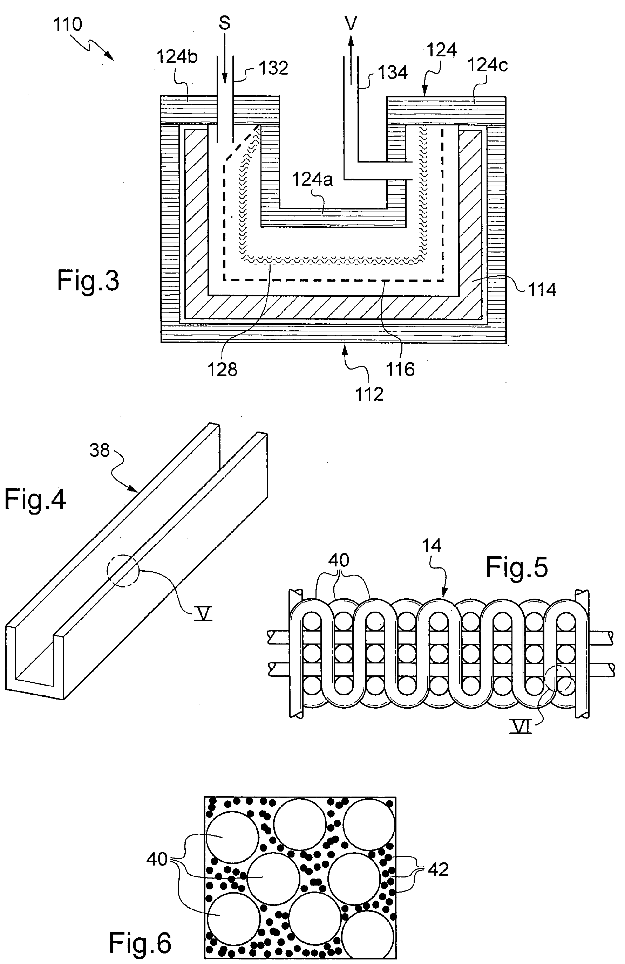

Dans la forme de réalisation de la figure 3, le dispositif 110 comprend des éléments analogues à ceux des figures 1 et 2, les mêmes éléments étant désignés par les mêmes références numériques augmentées de 100.

Le moule 112 a ici une section transversale en forme générale de U et la membrane imperméable 124, formant contre-moule, comprend une partie centrale 124a à section en U et deux parties latérales 124b et 124c venant reposer sur des bords du moule 112. Ainsi, le moule 112 et la membrane imperméable 124 délimitent conjointement une cavité de moulage à section en forme de U pour permettre l'élaboration d'une pièce à section en U, qui sera décrite plus loin.

Ici, le moule 112 et la membrane 124 sont indéformables et forment un cadre rigide, ce qui permet de mettre en oeuvre un procédé de moulage à volume constant.

Le renfort fibreux 114 a également une section générale en forme de U, de même que la membrane perméable 116. En outre, un tissu drainant 128 est mis en place au-dessus de la membrane perméable 116 et au-dessous de la partie centrale 124a de la membrane imperméable 124.

Le conduit d'injection 132 traverse de façon étanche la partie 124b, tandis que le conduit d'aspiration 134 débouche dans la partie centrale 124a.

Le dispositif 110 de la figure 3 permet de réaliser une pièce 38 (préforme infiltrée) à section générale en forme de U, telle que représentée sur la figure 4. Cette pièce peut avoir des dimensions élevées, par exemple une longueur d'un ou plusieurs mètres. Il est bien évident que d'autres formes sont possibles.

La figure 5 montre un détail de la pièce 38 avec son renfort fibreux 14 composé de fibres 40 disposées suivant un réseau 3D orthogonal.

La figure 6 montre un détail avec les fibres 40 et les particules 42 de la matrice, par exemple des particules d'alumine. On voit que les particules 42 ont un diamètre nettement inférieur à la taille des interstices entre les fibres. Ici, ce diamètre est entre 5 et 10 fois plus petit que la taille des interstices.

L'invention sera en outre décrite plus particulièrement en référence aux exemples suivants.

### Exemple 1 : élaboration d'un composite alumine/alumine par un procédé d'infiltration d'une suspension dans un renfort fibreux à volume variable

Une suspension aqueuse constituée de 2500g d'alumine submicronique pour un litre d'eau à pH 1 est préparée. Un liant PVA (alcool polyvinylique) est ajouté à hauteur de 6 % en masse de l'alumine et la suspension est homogénéisée pendant trois heures par un broyage en jarre. Un renfort fibreux Nextel® 610 de structure 3D est placé sur un support plan formant le fond de moule (moule 12 de la figure 1). On positionne par-dessus : un tissu d'arrachage 22 qui fait office de tissu drainant, une membrane 16 perméable aux gaz et/ou aux liquides, un tissu drainant 28 et une membrane imperméable 24 (voir la figure 1).

Un vide V est fait entre la membrane perméable 16 et la membrane imperméable 24, dans la deuxième cavité 26, ce qui induit un vide dans la première cavité 20 et, par conséquent, dans le renfort fibreux 14. La suspension S est ensuite infusée par dépression dans le renfort fibreux au travers de la conduite d'injection 32.

L'ensemble est ensuite chauffé à environ 100°C afin d'évaporer totalement l'eau de la matrice et de l'éliminer au travers de la membrane perméable 16 puis de la conduite d'aspiration 34. On obtient un produit composite qui est ensuite démoulé puis fritté à une température de 1100°C-1200°C.

Lors du démoulage, le tissu d'arrachage ou tissu drainant 22 facilite la séparation du produit moulé d'une part et des membranes 16 et 24 formant contre-moule d'autre part.

### Exemple 2 : élaboration d'un composite aluminosilicate/alumine par un procédé d'infiltration d'une suspension dans un renfort fibreux à volume constant

Une suspension aqueuse constituée de 4000 grammes d'alumine submicronique pour un litre d'eau à pH 1 est préparée. La suspension est ensuite homogénéisée pendant trois heures par un broyage en jarre.

On utilise un renfort fibreux Nextel® 720 (tissu de fibres composé à 85 % d'alumine et 15 % de silice). Les plis de ce tissu sont placés dans un moule avec une forme en U (figure 3) et dont le cadre rigide fixe le taux volumique de fibres.

On place dessus, conformément à la figure 3 : une membrane 116 perméable aux gaz et/ou aux liquides, un tissu drainant 128 et la membrane 124 formant contre-moule.

Le vide est fait entre la membrane perméable et le contre-moule rigide, ce qui induit le vide dans les plis du renfort fibreux 114. La suspension est infiltrée sous vide avec une pression de 6,5 bars appliquée sur la suspension (pression d'injection) pour favoriser l'imprégnation. Le moule est chauffé à 100°C environ afin d'évaporer totalement l'eau de la matrice et de l'éliminer par la membrane perméable aux gaz et par le conduit d'aspiration 134.

On obtient ainsi une préforme analogue à la préforme 38 de la figure 4, qui est ensuite démoulée et frittée à 1200°C. Le taux volumique final de fibre est d'environ 50 % et le taux de porosité d'environ 25 %.

Le procédé de l'invention permet ainsi de réaliser des pièces en composites à matrice céramique de grande taille et de forme complexe avec un taux volumique de fibre contrôlé pouvant atteindre 60 %.

L'invention trouve une application préférentielle à l'élaboration de pièces dans le domaine de l'aéronautique ou de l'aérospatiale.

## Revendications

1. Procédé d'élaboration d'une pièce composite à matrice céramique (CMC) par infiltration d'une suspension d'une poudre céramique dans un renfort fibreux non pré-imprégné, **caractérisé en ce qu'**il comprend les étapes suivantes :
a) préparation d'une suspension (S) de poudre céramique contenant des particules (42) de granulométries choisies, dispersées dans au moins un solvant, dans laquelle la poudre céramique contient des particules (42) ayant un diamètre entre 5 et 10 fois plus petit que la taille des interstices délimité par les fibres composant le renfort fibreux (14 ; 114), et dans laquelle la suspension présente un taux de charge en particules suffisant pour ne nécessiter qu'une seule étape d'infiltration ;
b) mise en place d'un renfort fibreux (14 ; 114) sous la forme de plis d'un tissu de fibres, dans un moule (12 ; 112) ;
c) mise en place d'une membrane perméable (16 ; 116) de perméabilité choisie sur le renfort fibreux (14 ; 114) c'est-à-dire perméable aux gaz et/ou aux liquides, permettant ainsi de fermer une première cavité (20) contenant le renfort fibreux;
d) mise en place d'une membrane imperméable (24 ; 124), formant contre-moule, permettant ainsi de fermer une deuxième cavité (26), étanche, accolée à la première cavité (20) et contenant cette première cavité ;
e) établissement d'un vide entre la membrane imperméable et la membrane perméable, dans la deuxième cavité (26), de manière à faire le vide dans la première cavité (20);
f) injection, dans ladite première cavité (20), sous la membrane perméable (16 ; 116), de la suspension de poudre céramique de l'étape a) dans le renfort fibreux, par différence de pression, l'injection étant réalisée en une seule étape d'infiltration ;
g) élimination du solvant à travers la membrane perméable pour obtenir une préforme infiltrée;
h) démoulage de la préforme infiltrée obtenue à l'étape g) ; et
i) frittage de la préforme infiltrée obtenue à l'étape h).

2. Procédé selon la revendication 1, dans lequel la suspension (S) de poudre de céramique préparée à l'étape a) comprend au moins une poudre céramique, au moins un solvant et au moins un précurseur de céramique.

3. Procédé selon l'une des revendications 1 et 2, dans lequel les particules (42) de la poudre de céramique sont d'au moins deux granulométries différentes, comprenant des diamètres de particules entre 5 et 10 fois plus petit que la taille des interstices entre les fibres des renforts fibreux et des diamètres de particule entre 50 et 100 fois plus petits que la taille des interstices entre les fibres des renforts fibreux.

4. Procédé selon l'une des revendications 2 et 3, dans lequel la suspension de poudre de céramique préparée à l'étape a) comprend au moins un précurseur de céramique, en particulier du type zircone, mullite, alumine, silice ou un de leurs mélanges.

5. Procédé selon l'une des revendications 1 à 4, dans lequel la suspension de poudre de céramique préparée à l'étape a) comprend en outre un liant et/ou un plastifiant et/ou un agent mouillant et/ou un agent anti-moussant.

6. Procédé selon la revendication 5, dans lequel le liant est choisi parmi PVA et PMMA, le plastifiant est un PEG faible densité, l'agent mouillant est un polyméthacrylate d'ammonium et l'agent anti-moussant est un dérivé d'acide gras et d'hydrocarbures.

7. Procédé selon l'une des revendications 1 à 6, comprenant en outre une étape de désensimage du renfort fibreux (14 ; 114) mis en place à l'étape b), cette étape de désensimage étant mise en oeuvre avant et/ou pendant l'étape d'injection f), par action thermique ou chimique, par exemple par dissolution de l'ensimage dans le solvant.

8. Procédé selon l'une des revendications 1 à 7, dans lequel une interphase, par exemple du carbone ou du nitrure de bore, est déposée sur le renfort fibreux préalablement à l'étape d'injection f).

9. Procédé selon l'une des revendications 1 à 8, dans lequel le composite est entièrement enrobé d'une membrane perméable puis d'une membrane imperméable, ce qui permet d'éliminer les gaz et les liquides de part et d'autre du composite.

10. Procédé selon l'une des revendications 1 à 9, dans lequel : l'étape g) réalise l'élimination du solvant et autres éléments indésirables par aspiration dans la deuxième cavité et/ou par chauffage.

11. Procédé selon l'une des revendications 1 à 10, dans lequel le moule et la membrane imperméable forment un contre-moule rigide et délimitent conjointement une cavité de moulage de volume fixe.

12. Procédé selon l'une des revendications 1 à 10, dans lequel le moule et la membrane imperméable formant contre-moule délimitent conjointement une cavité de moulage de volume variable, le contre-moule étant de structure souple ou semi-rigide.

## Patentansprüche

1. Verfahren zur Herstellung eines Keramikmatrixverbundteils (CMC) durch Infiltrieren einer Keramikpulversuspension in eine nicht vorimprägnierte Faserverstärkung, **dadurch gekennzeichnet, dass** es die folgenden Schritte umfasst:
a) Zubereiten einer Keramikpulversuspension (S), die Partikel (42) mit ausgewählten Korngrößen enthält, die in mindestens einem Lösungsmittel dispergiert sind, wobei das Keramikpulver Partikel (42) mit einem Durchmesser enthält, der zwischen 5 und 10 Mal kleiner ist als die Größe der Zwischenräume, die durch die Fasern begrenzt ist, aus denen sich die Faserverstärkung (14; 114) zusammensetzt, und wobei die Suspension einen Füllanteil an Partikeln aufweist, der ausreicht, um nur einen einzigen Infiltrationsschritt erforderlich zu machen;
b) Einsetzen einer Faserverstärkung (14; 114) in Form von Lagen eines Fasergewebes in eine Form (12; 112);
c) Anbringen einer durchlässigen Membran (16; 116) mit einer ausgewählten Durchlässigkeit, d.h. durchlässig für Gase und/oder Flüssigkeiten, über der Faserverstärkung (14; 144), womit es ermöglicht wird, einen ersten Hohlraum (20) zu schließen, der die Faserverstärkung enthält;
d) Einsetzen einer undurchlässigen Membran (24; 124), die eine Gegenform bildet, wodurch es ermöglicht wird, einen zweiten, dichten Hohlraum (26) zu schließen, der mit dem ersten Hohlraum (20) angefügt ist und den ersten Hohlraum enthält;
e) Herstellen eines Vakuums zwischen der undurchlässigen Membran und der durchlässigen Membran im zweiten Hohlraum (26), und zwar so, dass das Vakuum im ersten Hohlraum (20) entsteht;
f) Einleiten, in den ersten Hohlraum (20) unter die durchlässige Membran (16; 116) der Keramikpulversuspension, des Schritts a) in die Faserverstärkung durch Druckunterschied, wobei das Einleiten in einem einzigen Infiltrationsschritt erfolgt;
g) Entfernen des Lösungsmittels durch die durchlässige Membran, um einen infiltrierten Vorformling zu erhalten;
h) Entnehmen des im Schritt g) erhaltenen infiltrierten Vorformlings aus der Form; und
i) Sintern des im Schritt h) erhaltenen infiltrierten Vorformlings.

2. Verfahren nach Anspruch 1, wobei die im Schritt a) zubereitete Keramikpulversuspension (S) mindestens ein Keramikpulver, mindestens ein Lösungsmittel und mindestens einen Keramikvorläufer umfasst.

3. Verfahren nach einem der Ansprüche 1 und 2, wobei die Partikel (42) des Keramikpulvers von mindestens zwei verschiedenen Korngrößen sind, die Partikeldurchmesser, die zwischen 5 und 10 Mal kleiner sind als die Größe der Zwischenräume zwischen den Fasern der Faserverstärkungen, und Partikeldurchmesser umfassen, die zwischen 50 und 100 Mal kleiner sind als die Größe der Zwischenräume zwischen den Fasern der Faserverstärkungen.

4. Verfahren nach einem der Ansprüche 2 und 3, wobei die im Schritt a) zubereitete Keramikpulversuspension mindestens einen Keramikvorläufer, insbesondere des Typs Zirkon, Mullit, Aluminiumoxid, Siliciumoxid oder eines ihrer Gemische umfasst.

5. Verfahren nach einem der Ansprüche 1 bis 4, wobei die im Schritt a) zubereitete Keramikpulversuspension darüber hinaus ein Bindemittel und/oder einen Weichmacher und/oder ein Benetzungsmittel und/oder ein Antischaummittel umfasst.

6. Verfahren nach Anspruch 5, wobei das Bindemittel aus PVA und PMMA ausgewählt ist, der Weichmacher ein PEG geringer Dichte ist, das Benetzungsmittel ein Ammoniumpolymethacrylat ist, und das Antischaummittel ein Derivat von Fettsäure und Kohlenwasserstoffen ist.

7. Verfahren nach einem der Ansprüche 1 bis 6, darüber hinaus einen Schritt zur Entfettung der im Schritt b) eingesetzten Faserverstärkung (14; 114) umfassend, wobei dieser Entfettungsschritt vor und/oder während des Einleitschritts f) durch thermische oder chemische Wirkung, zum Beispiel durch Auflösen der Fettmasse im Lösungsmittel erfolgt.

8. Verfahren nach einem der Ansprüche 1 bis 7, wobei eine Zwischenphase, beispielsweise Kohlenstoff oder Bornitrid, vor dem Einleitschritt f) auf der Faserverstärkung abgeschieden wird.

9. Verfahren nach einem der Ansprüche 1 bis 8, wobei der Verbund vollständig von einer durchlässigen Membran und dann von einer undurchlässigen Membran umhüllt wird, wodurch die Gase und Flüssigkeiten beidseits des Verbunds entfernt werden können.

10. Verfahren nach einem der Ansprüche 1 bis 9, wobei: der Schritt g) die Entfernung des Lösungsmittels und anderer unerwünschter Elemente durch Ansaugen in den zweiten Hohlraum und/oder durch Erwärmen durchführt.

11. Verfahren nach einem der Ansprüche 1 bis 10, wobei die Form und die undurchlässige Membran eine starre Gegenform bilden und gemeinsam einen Formgebungshohlraum mit unveränderlichem Volumen begrenzen.

12. Verfahren nach einem der Ansprüche 1 bis 10, wobei die Form und die undurchlässige Membran, die eine Gegenform bilden, gemeinsam einen Formgebungshohlraum mit variablem Volumen begrenzen, wobei die Gegenform von nachgiebiger oder halbstarrer Struktur ist.

## Claims

1. Process for producing a ceramic matrix composite (CMC) part by infiltration of a suspension of a ceramic powder into a fibre reinforcement which has not been preimpregnated, **characterized in that** it comprises the following steps:
a) preparing a suspension (S) of ceramic powder containing particles (42) of chosen particle sizes dispersed in at least one solvent, in which the ceramic powder contains particles (42) having a diameter which is from 5 to 10 times smaller than the size of the voids delimited by the fibres of which the fibre reinforcement (14; 114) is composed, and in which the suspension has a loading rate of particles sufficient that only a single infiltration step is required;
b) positioning a fibre reinforcement (14; 114) in the form of plies of a fibre fabric, in a mould (12; 112);
c) positioning on the fibre reinforcement (14; 114) a permeable membrane (16; 116) of chosen permeability, that is to say that is permeable to gases and/or to liquids, thus allowing a first cavity (20) containing the fibre reinforcement to be closed;
d) positioning an impermeable membrane (24; 124), which forms a counter-mould, thus allowing a second, tight cavity (26) which is next to the first cavity (20) and contains the first cavity to be closed;
e) establishing a vacuum between the impermeable membrane and the permeable membrane, in the second cavity (26), so as to create the vacuum in the first cavity (20);
f) injecting, into said first cavity (20), beneath the permeable membrane (16; 116), the suspension of ceramic powder of step a) into the fibre reinforcement, by means of a difference of pressure, the injection being carried out in a single infiltration step;
g) removing the solvent through the permeable membrane in order to obtain an infiltrated preform;
h) removing the infiltrated preform obtained in step g) from the mould; and
i) sintering the infiltrated preform obtained in step h).

2. Process according to claim 1, in which the suspension (S) of ceramic powder prepared in step a) comprises at least one ceramic powder, at least one solvent and at least one ceramic precursor.

3. Process according to either claim 1 or claim 2, in which the particles (42) of the ceramic powder are of at least two different particle sizes, comprising particle diameters which are from 5 to 10 times smaller than the size of the voids between the fibres of the fibre reinforcements and particle diameters which are from 50 to 100 times smaller than the size of the voids between the fibres of the fibre reinforcements.

4. Process according to either claim 2 or claim 3, in which the suspension of ceramic powder prepared in step a) comprises at least one ceramic precursor, in particular of the type zirconia, mullite, alumina, silica or a mixture thereof.

5. Process according to any one of claims 1 to 4, in which the suspension of ceramic powder prepared in step a) further comprises a binder and/or a plasticiser and/or a wetting agent and/or an antifoam.

6. Process according to claim 5, in which the binder is selected from PVA and PMMA, the plasticiser is a low-density PEG, the wetting agent is an ammonium polymethacrylate, and the antifoam is a derivative of fatty acid and hydrocarbons.

7. Process according to any one of claims 1 to 6, further comprising a step of de-sizing the fibre reinforcement (14; 114) positioned in step b), the de-sizing step being carried out before and/or during the injection step f), by thermal or chemical action, for example by dissolving the size in the solvent.

8. Process according to any one of claims 1 to 7, in which an interphase, for example carbon or boron nitride, is deposited on the fibre reinforcement prior to the injection step f).

9. Process according to any one of claims 1 to 8, in which the composite is covered completely in a permeable membrane and then an impermeable membrane, which allows the gases and liquids to be removed on both sides of the composite.

10. Process according to any one of claims 1 to 9, in which: step g) effects the removal of the solvent and other undesirable elements by aspiration into the second cavity and/or by heating.

11. Process according to any one of claims 1 to 10, in which the mould and the impermeable membrane form a rigid counter-mould and together delimit a moulding cavity of fixed volume.

12. Process according to any one of claims 1 to 10, in which the mould and the impermeable membrane form a flexible or semi-rigid counter-mould and together delimit a moulding cavity of variable volume, the counter-mould being of flexible or semi-rigid structure.
